# EUROPÄISCHE PATENTSCHRIFT

(11) **EP 3 226 480 B1**
(45) Veröffentlichungstag und Bekanntmachung des Hinweises auf die Patenterteilung: **07.11.2018**
(21) Anmeldenummer: 17163497.5
(22) Anmeldetag: 29.03.2017
(51) Int. Cl.: H04L 12/26

(54) **VORRICHTUNG ZUM ERKENNEN EINES KOMMUNIKATIONSSTANDARDS UND ENTSPRECHENDES VERFAHREN**
DEVICE FOR DETECTING A COMMUNICATION STANDARD AND CORRESPONDING METHOD
DISPOSITIF DE DÉTECTION D'UNE NORME DE COMMUNICATION ET PROCÉDÉ CORRESPONDANT

(30) Priorität: 31.03.2016 DE 102016205341
(43) Veröffentlichungstag der Anmeldung: 04.10.2017
(73) Patentinhaber: Fraunhofer-Gesellschaft zur Förderung der angewandten Forschung e.V., 80686 München (DE)
(72) Erfinder: MILOSIU, Heinrich, 91056 Erlangen (DE); OEHLER, Frank, 91325 Adelsdorf (DE); EPPEL, Markus, 90429 Nürnberg (DE); KUBA, Matthias, 90419 Nürnberg (DE); ADEL, Hans, 90547 Stein (DE)
(74) Vertreter: Hersina, Günter

(56) Entgegenhaltungen:
- DE-T2-602004 009 428
- US-A1- 2010 254 267
- US-A1- 2014 258 779
- US-A1- 2014 323 056

## Beschreibung

Die Erfindung bezieht sich auf eine Vorrichtung zum Erkennen eines Kommunikationsstandards. Weiterhin bezieht sich die Erfindung auf ein Verfahren zum Erkennen eines Kommunikationsstandards. Das Erkennen des Kommunikationsstandards (eine alternative Bezeichnung ist Protokoll) bezieht sich dabei insbesondere auf das Erkennen, welcher Kommunikationsstandard für die Aussenden von mit Daten versehenen elektromagnetischen Signalen verwendet wird. Das Erkennen des Kommunikationsstandards erlaubt ebenfalls das Erkennen, welchem Modus des jeweiligen Standards die Signale zuzuordnen sind. Beispiele für Kommunikationsstandards bzw. Funkprotokolle sind: Wireless LAN, Bluetooth, Bluetooth Low Energy, ZigBee, WirelessHART sowie Mobilfunkdienste (GSM, DECT, LTE, GPRS, EDGE, UMTS) oder auch beliebige proprietäre Funkprotokolle. Beispiele für die Modi sind z. B. für den Bluetooth-Standard Inquiry, Connection oder Übertragung. Für den Standard WLAN sind dies Connection und Übertragung.

Das automatische Erkennen von verwendeten Kommunikationsstandards wird beispielsweise in Anwendungen für die Funküberwachung bzw. -Analyse ("Funkmonitoring") benötigt, in denen innerhalb einer bestimmten Umgebung automatisch festgestellt werden soll, mit welchen Funksystemen bzw. Kommunikationsstandards innerhalb dieser Umgebung Daten funkbasiert ausgetauscht werden. Die ermittelten Informationen dienen beispielsweise der Stör- und Fehleranalyse innerhalb eines Funknetzwerks: Kommt es in einem bestehenden Netzwerk zu Datenverlusten auf dem Übertragungsweg, so ist ein möglicher Grund hierfür die Störung durch ein anderes Funksystem (sog. Koexistenzproblem). Durch die automatische Erkennung anderer sich in der Umgebung befindlichen Kommunikationsstandards ist eine Eingrenzung der potentiellen Fehlerquellen möglich.

Ein Anwendungsbeispiel mag dies verdeutlichen:
In einer Lager- oder Produktionshalle sollen Signale eines bestimmten Kommunikationsstandards (S1) gemieden werden, damit die gewünschten Funksignale eines anderen Kommunikationsstandards (S2) mit möglichst hoher Zuverlässigkeit erkannt und demoduliert werden können. Dies sichert eine fehlerarme oder fehlerfreie Funkkommunikation nach Standard S2 und verhindert, dass einzelne Geräte oder Maschinen nicht per Funk erreichbar sind. Beispiele für solche Kommunikationsstandards S1 und S2 können Wireless LAN und Bluetooth sein.

Eine weitere Anwendung besteht in der bedarfsorientierten An- bzw. Abschaltung von Funksystemen. Dies dient dem niedrigeren Gesamtleistungsverbrauchs des Systems. So kann beispielsweise ein WLAN-Transceiver in mobilen Endgeräten ausgeschaltet bleiben, solange sich kein anderes WLAN-System in Reichweite befindet, mit dem sich der Transceiver verbinden könnte. Daher ist die Information erforderlich, ob ein anderes aktives WLAN-System vorliegt.

Sind beispielsweise in einem Wohn- oder Büroraum über längere Zeiten keine Personen mit WLAN-Geräten anwesend, so kann ein WLAN-Router abgeschaltet oder in einen Energiesparmodus versetzt werden. Betreten Personen mit aktiven WLAN-Geräten den Raum mit dem WLAN-Router, so ließe sich nach dem Erkennen der Anwesenheit von WLAN-Signalen der WLAN-Router wieder aktivieren.

Zur Lösung von Problemen bezüglich der automatischen Klassifikation der Kommunikationsstandards oder Modulationsarten von Nachrichtensignalen existieren grundsätzlich zwei Herangehensweisen:
Hypothesentestbasierte Klassifikatoren beruhen auf der Detektions- und Estimationstheorie und sind optimal im Sinne der Wahrscheinlichkeit korrekter Entscheidungen. Jedoch führen diese Ansätze oftmals nicht zu realisierbaren Lösungen, wenn sehr heterogene Signale betrachtet werden oder die Zahl unbekannter Signalparameter groß ist. Geschlossene mathematische Lösungen lassen sich häufig nur durch Näherungen und Annahmen finden. Zudem weisen solche Verfahren eine hohe Rechenkomplexität auf, die eine stromsparende Realisierung verhindert.

Merkmalsbasierte Klassifikatoren hingegen beruhen auf den Prinzipien der Mustererkennung. Obwohl diese Verfahren im Gegensatz zu den hypothesentestbasierten Ansätzen nicht optimal sind, kann bei geeigneter Wahl der Merkmale eine Fehlerwahrscheinlichkeit nahe dem Optimum erreicht werden. Dies bei mitunter deutlich reduzierter algorithmischer Komplexität, was für eine stromsparende Implementierung mit moderatem Chipflächenbedarf spricht. Nichtsdestotrotz verursachen auch moderne merkmalsbasierte Klassifikatoren hohen algorithmischen Aufwand. Das Empfangssignal muss im Allgemeinen mit hoher Abtastrate abgetastet werden und die Berechnung der Merkmale sowie die Entscheidungsfindung basierend auf den errechneten Werten dieser Merkmale beruhen auf aufwendigen mathematischen Verfahren (bspw. der Berechnung von Standardabweichungen, statistischen Momenten höherer Ordnung, Histogrammen etc. von Signalgrößen wie Amplitude, Phase und Frequenz sowie Entscheidungsfindungsverfahren wie bspw. künstlichen neuronalen Netzen, Bayes-Klassifikatoren oder die k-nächste-Nachbarn-Methode).

Für die praktische Anwendung dürfen die verwendeten Algorithmen zur automatischen Erkennung des verwendeten Kommunikationsstandards nicht zu komplex oder zu rechenaufwendig sein, da dies in der Regel mit erhöhtem Leistungs- bzw. Ressourcenbedarf einhergeht.

In der US 2010/0254267 A1 wird ein Verfahren offenbart, um bei empfangenen Signalen die jeweils verwendeten Kommunikationsstandards zu erkennen. Dabei werden einzelne Bursts aus den Empfangssignalen herauspräpariert, um für die individuellen Bursts Kenngrößen zu ermitteln und mit hinterlegten Daten zu vergleichen.

Die US 2014/0323056 A1 offenbart eine automatische Auswertung von empfangenen Signalen, wobei einzelne Signale in den empfangenen Signalen erkannt und für eine Auswertung mit hinterlegten Daten herangezogen werden. Dabei wird auch genannt, dass sich so ein verwendetes Protokoll erkennen lässt.

Die der Erfindung zugrundeliegende Aufgabe besteht darin, eine Vorrichtung und ein Verfahren anzugeben, die es erlauben, einen für ein Signal verwendeten Kommunikationsstandard zu erkennen.

Die Erfindung löst die Aufgabe durch eine Vorrichtung zum Erkennen eines Kommunikationsstandards. Dabei weist die Vorrichtung mindestens ein Funkempfänger-Frontend, einen Demodulator und einen Mustererkenner auf.

Das Funkempfänger-Frontend ist derartig ausgestaltet, mindestens ein - vorzugsweise elektromagnetisches - Empfangssignal zu empfangen. Hierfür verfügt das Frontend in einer Ausgestaltung über eine Antennenvorrichtung.

Der Demodulator ist derartig ausgestaltet, das Empfangssignal und/oder ein davon abhängiges Signal mit mindestens einem Grenzwert abzutasten. Ausgehend von der Abtastung erzeugt der Demodulator ein Abtastsignal. Das Abtasten mit dem Grenzwert sieht in einer Ausgestaltung vor, dass der Demodulator vergleicht, ob in dem empfangenen Signal oder einem davon abhängigen Signal eine Messgröße ober- oder unterhalb des Grenzwerts liegt. Der Grenzwert ist beispielsweise eine Amplitude oder eine Frequenz. Ausgehend von diesem Vergleich bzw. dieser Abtastung erzeugt der Demodulator ein Abtastsignal.

Weiterhin ist der Mustererkenner derartig ausgestaltet, das Abtastsignal auszuwerten. Dies geschieht anhand von Daten, die für mindestens einen Kommunikationsstandard und/oder für mindestens einen Signalmodus hinterlegt sind. Die Auswertung nimmt der Mustererkenner in Bezug auf einen für das Empfangssignal verwendeten Kommunikationsstandard und/oder in Bezug auf einen für das Empfangssignal verwendeten Signalmodus vor. Die Auswertung umfasst in einer Ausgestaltung dabei eine Klassifizierung in Bezug auf den Kommunikationsstandard bzw. den Signalmodus. Das Erkennen des Signalmodus (also z. B. Inquiry, Connection oder Übertragung) setzt dabei in einer Ausgestaltung darauf, dass zunächst der verwendete Kommunikationsstandard erkannt wird. In einer alternativen Ausgestaltung wird direkt der Signalmodus erkannt, wobei prinzipiell erkannt wird, dass überhaupt ein Kommunikationsstandard verwendet wird.

Die Erfindung vereinfacht somit die Erkennung von Kommunikationsstandards bzw. Signalmodi dadurch, dass die Signale durch den Vergleich mit mindestens einem Grenzwert in Bezug auf eine Messgröße (z. B. Frequenz oder Amplitude) gefiltert und damit in einer einfacher zu verarbeitende Form gebracht werden. Dies reduziert den Aufwand für die Auswertung der Signale bzw. für das Erkennen der Standards oder Modi.

In den folgenden Ausgestaltungen wird erläutert, wie es weiterhin möglich ist, den Energiebedarf herabzusetzen. Damit wird es zusätzlich ermöglicht, eine stromsparende bzw. batteriebetriebene und mobil einsetzbare Vorrichtung bereitzustellen.

Eine Ausgestaltung sieht vor, dass das Funkempfänger-Frontend derartig ausgestaltet ist, basierend auf dem Empfangssignal ein Zwischenfrequenz-Signal zu erzeugen. Das Zwischenfrequenz-Signal ist daher ein Beispiel für ein von dem Empfangssignal abhängiges Signal. Dabei ist in der Ausgestaltung eine Frequenz des Zwischenfrequenz-Signals kleiner als eine Frequenz des Empfangssignals.

Das Funkempfänger-Frontend setzt in der Ausgestaltung die Frequenz der zu verarbeitenden Signale herunter, so dass die Auswertung vereinfacht bzw. der Energiebedarf und der Anspruch an die verwendeten Bauteile herabgesetzt ist. Hierfür verfügt das Frontend beispielweise über einen Mischer.

In einer alternativen Ausgestaltung werden die durch das Funkempfänger-Frontend empfangenen Signale direkt dem Demodulator zugeführt. Dies bezieht sich beispielsweise auf Signale, die über die Stromleitung übertragen werden (sog. Powerline-Signale), oder auf Signalen im Kurzwellenbereich.

Eine Ausgestaltung beinhaltet, dass das Funkempfänger-Frontend derartig ausgestaltet ist, das Empfangssignal nur mit einer vorgebbaren Empfangsfrequenz zu empfangen. Die Signale werden dabei in einer Ausgestaltung per Funk empfangen. In einer alternativen Ausgestaltung empfängt das Funkempfänger-Frontend (in diesem Zusammenhang als Empfänger-Frontend zu bezeichnen) Signale kabelgebunden.

Eine Ausgestaltung sieht vor, dass das Funkempfänger-Frontend derartig ausgestaltet ist, das Empfangssignal mit unterschiedlichen vorgebbaren Empfangsfrequenzen zu empfangen. Der Empfang mit unterschiedlichen Empfangsfrequenzen geschieht in einer Ausgestaltung nacheinander und in einer alternativen Ausgestaltung zeitgleich.

Eine Ausgestaltung beinhaltet, dass das Funkempfänger-Frontend derartig ausgestaltet ist, dass das Funkempfänger-Frontend mit periodischen Unterbrechungen betreibbar ist. Das Funkempfänger-Frontend ist somit nicht ständig an, sondern wird periodisch ein- und wieder ausgeschaltet.

Eine Ausgestaltung sieht vor, dass der Demodulator derartig ausgestaltet ist, als Abtastsignal mindestens ein binäres Digitalwort zu erzeugen. Das Abtastsignal ist somit in dieser Ausgestaltung ein digitales Signal, das mindestens ein Wort aufweist. Das Digitalwort liegt in binärer Form vor, so dass also nur logische Einser und Nullen vorhanden sind. Das Digitalwort bezieht sich in einer Ausgestaltung insbesondere auf die Abtastung mit einem Grenzwert. Werden daher in einer Ausgestaltung mehrere Grenzwerte verwendet, so umfasst das Abtastsignal für jeden Grenzwert ein binäres Digitalwort.

Eine Ausgestaltung beinhaltet, dass das binäre Digitalwort einen Wertebereich zwischen Null und einer Anzahl der von dem Demodulator verwendeten Grenzwerte aufweist. Werden drei Grenzwerte verwendet, so verfügt das binäre Digitalwort in dieser Ausgestaltung über einen Wertebereich von Null bis Drei. In einer Ausgestaltung reicht der Wertebereich von Null bis zu der um Eins verringerten Anzahl der Grenzwerte. Ist N die Anzahl der Grenzwerte, so reicht der Wertebereich also von 0 bis (N - 1). Für die Verwendung von einem Grenzwert sei dabei N = 2.

Eine Ausgestaltung sieht vor, dass der Demodulator derartig ausgestaltet ist, das Abtastsignal derartig zu erzeugen, dass das Abtastsignal Information darüber gibt, wie zu einem Abtastzeitpunkt das Empfangssignal und/oder das davon abhängige Signal relativ zu dem mindestens einen Grenzwert liegt. Liegt also beispielsweise die jeweilige Messgröße des betrachteten Signals unterhalb des Grenzwerts, so wird eine logische Null erzeugt. Liegt die Messgröße - beispielsweise die Amplitude - oberhalb des Grenzwerts, so wird eine logische Eins erzeugt.

Eine Ausgestaltung beinhaltet, dass der Demodulator derartig ausgestaltet ist, das Empfangssignal und/oder das davon abhängige Signal mit mehreren Grenzwerten abzutasten. In dieser Ausgestaltung wird das zu verarbeitende Signal - also das Empfangssignal oder ein davon abgeleitetes Signal, z. B. das Zwischenfrequenz-Signal - mit unterschiedlichen Grenzwerten oder auch Schwellenwerten abgetastet bzw. gefiltert.

Eine Ausgestaltung sieht vor, dass der Demodulator derartig ausgestaltet ist, für die Abtastung mit jeweils einem Grenzwert ein zugehöriges Abtastsignal zu erzeugen. In dieser Ausgestaltung gibt es somit pro Grenzwert ein Abtastsignal, das jeweils angibt, wie sich das abgetastete Signal relativ zum jeweiligen Grenzwert verhält.

Eine Ausgestaltung beinhaltet, dass der Demodulator derartig ausgestaltet ist, das Abtastsignal als Folge von Abtastwerten mit einer vorgebbaren Abtastrate zu erzeugen.

Eine Ausgestaltung sieht vor, dass der Demodulator als Amplitudenmodulations-Demodulator oder als Frequenzmodulations-Demodulator oder als Amplitudenumtastungs-Demodulator ausgestaltet ist.

Eine Ausgestaltung beinhaltet, dass der Demodulator derartig ausgestaltet ist, dass der Demodulator mit periodischen Unterbrechungen betreibbar ist. In dieser Ausgestaltung wird der Demodulator stromsparend betrieben, indem er nicht ständig an bzw. aktiv ist.

Eine Ausgestaltung sieht vor, dass der Mustererkenner derartig ausgestaltet ist, das Abtastsignal nach mindestens einem für einen Kommunikationsstandard und/oder einen Signalmodus hinterlegten Suchmuster zu durchsuchen und ein Maß für die Ähnlichkeit zu ermitteln. In dieser Ausgestaltung sind Suchmuster für den Mustererkenner hinterlegt, die jeweils Kommunikationsstandards bzw. Signalmodi zugeordnet sind. Die Signalmodi sind dabei - wie bereits erwähnt - einzelne Signaltypen oder Signalgruppen, die sich jeweils auf unterschiedliche "Kommunikationsarten" beziehen.

Eine Ausgestaltung beinhaltet, dass der Mustererkenner derartig ausgestaltet ist, das Abtastsignal nach mehreren für unterschiedliche Kommunikationsstandards und/oder Signalmodi hinterlegten Suchmustern zu durchsuchen und ein Maß für die Ähnlichkeit zu ermitteln.

Eine Ausgestaltung sieht vor, dass der Mustererkenner derartig ausgestaltet ist, das Abtastsignal oder Teile des Abtastsignals nach Merkmalen, für die Referenzdaten hinterlegt sind, zu durchsuchen.

In einer Ausgestaltung realisiert der Mustererkenner eine Baumstruktur für die Merkmalsprüfung.

In einer Ausgestaltung beziehen sich die Referenzdaten auf eine Aneinanderreihung von einzelnen Merkmalsprüfungen (Paketdauern, Periodendauern, Sendepausen etc.). Vorzugsweise sind die Merkmale mit einer hohen Erkennungswahrscheinlichkeit für einen bestimmten Funkstandard (bzw. Modus innerhalb eines Funkstandards) vorgegeben.

Eine Ausgestaltung beinhaltet, dass der Mustererkenner derartig ausgestaltet ist, das Abtastsignal oder Teile des Abtastsignals gleichzeitig nach mehreren Merkmalen zu durchsuchen. Die Auswertung bezieht sich in einer Ausgestaltung auf unterschiedliche Frequenzen oder Frequenzbänder.

Eine Ausgestaltung sieht vor, dass der Mustererkenner derartig ausgestaltet ist, das Abtastsignal oder Teile des Abtastsignals nacheinander nach mehreren Merkmalen zu durchsuchen.

Eine Ausgestaltung beinhaltet, dass der Mustererkenner derartig ausgestaltet ist, innerhalb des Abtastsignals steigende und/oder fallende Flanken zu erkennen, zu charakterisieren und mit den für die Kommunikationsstandards hinterlegen Daten abzugleichen.

Die obigen Merkmale oder Muster sind beispielsweise der Verlauf von Pulsen, die sich nach der Abtastung durch den Demodulator ergeben. Die Pulse lassen sich dabei durch ihre Dauer und durch die Pausen zwischen den Pulsen beschreiben. Die Merkmale beziehen sich in weiteren Ausgestaltungen alternativ oder ergänzend auf den Wechsel zwischen Frequenzen usw.

Die Mustererkennung ist in einer weiteren Ausgestaltung dadurch bedingt, welche Zeitbereiche jeweils ausgewertet werden und welche Muster sich innerhalb der Zeitbereiche zeigen. Dies hat in einer Ausgestaltung insbesondere Auswirkungen auf die Ermittlung eines Maßes für die Ähnlichkeit zwischen dem hinterlegten Muster und dem zu verarbeitenden Signal.

In einer Ausgestaltung werden Pulse oder Datenpakete in zeitlichen Untersuchungsfenstern identifiziert. Dies bezieht sich in einer weiteren Ausgestaltung auch auf den jeweils für den Empfang der Signale verwendeten Kanal, also die Empfangsfrequenz.

Liegen daher in einer Ausgestaltung mehrere Datenpakete an beliebigen Stellen innerhalb das Untersuchungsfensters und auch innerhalb des jeweils aktuell betrachteten Empfangskanals, so werden die Dauern der Datenpakete zusammen mit den Zeiten (sog. Offzeiten) zwischen den Datenpaketen als Merkmale verwendet. Das letzte Datenpaket wird in einer Ausgestaltung ignoriert, da es zu diesem keine entsprechende Offzeit (N0) mehr gibt.

Kommt im aktuell betrachteten Empfangskanal nur ein vollständiges Datenpaket vor, so wird als dazugehörige Offzeit N0 entweder die Anzahl an Samples verwendet, die im Untersuchungsfenster vor dem Datenpaket kommt, oder es wird jene Anzahl an Samples verwendet, die im Untersuchungsfenster nach dem Datenpaket kommt. Die Auswahl hängt davon ab, welche Zeit länger ist.

Beginnt das Untersuchungsfenster mit einem Datenpaket, so ist davon auszugehen, dass dieses nicht vollständig im Untersuchungsfenster liegt, sondern bereits davor begonnen hat. Es ist daher nicht repräsentativ und muss verworfen werden. Die darauffolgende Offzeit bis zum nächsten Datenpaket ist hingegen repräsentativ und wird als N0 verwendet. Kommt allerdings innerhalb des Untersuchungsfensters kein weiteres Datenpaket mehr vor (außer dem Teil-Datenpaket zu Beginn), so wird in einer Ausgestaltung die Wertung vorgenommen, dass kein Datenpaket aufgetreten ist.

In einer Ausgestaltung wird stets versucht, eine Offzeit N0 einem davor aufgetretenen Datenpaket N1 zuzuordnen. Eine Ausnahme ist der obige Fall mit nur einem Datenpaket.

Indem auch die Betriebsmodi oder Signalmodi erkannt werden, sind in einer Ausgestaltung für mindestens einen Kommunikationsstandard mehrere Suchkriterien bzw. Daten für die Mustererkennung vorhanden. In einer Ausgestaltung wird somit zunächst der Kommunikationsstandard erkannt, um dann den vorhandenen Modus (also Signalmodus oder auch Betriebsmodus) zu erkennen.

Beispielsweise für den Bluetooth-Standard lassen sich die Modi Inquiry, Connection oder Übertragung unterscheiden. Für den WLAN-Standard sind dies die Modi Connection bzw. Übertragung.

In einer Ausgestaltung sind daher beispielsweise für den Bluetooth-Standard drei unterschiedliche Suchmuster vorhanden: BT-Inquiry, BT-Connection sowie BT-Übertragung.

Eine Ausgestaltung sieht vor, dass der Mustererkenner derartig ausgestaltet ist, innerhalb des Abtastsignals eine Dauer eines Datenpakets und/oder eine Dauer zwischen zwei Datenpaketen zu ermitteln.

Eine Ausgestaltung beinhaltet, dass der Mustererkenner derartig ausgestaltet ist, das Abtastsignal in Abhängigkeit von einer Empfangsfrequenz auszuwerten, mit der das Funkempfänger-Frontend das dem Abtastsignal zugehörige - insbesondere elektromagnetische - Empfangssignal empfangen hat.

Eine Ausgestaltung sieht vor, dass der Mustererkenner einen Zwischenspeicher zum Speichern zumindest von Teilen des Abtastsignals aufweist.

Eine Ausgestaltung beinhaltet, dass die Vorrichtung einen Datenspeicher für das Hinterlegen von Daten für Kommunikationsstandards aufweist.

Die Beurteilung der Mustererkennung erfolgt in einer Ausgestaltung nach Mehrheitsentscheid:
Beispielsweise sind drei Konfidenzstufen vorgegeben:
K2 - Standard (bzw. Modus) ziemlich sicher vorhanden
K1 - Standard vermutlich vorhanden
K0 - Standard wahrscheinlich nicht vorhanden.

Liegen für einen Frequenzkanal N_{C} Klassifikationen vor, von denen N_{Std} einem Standard entsprechen, so sei die Zuordnung zu den Stufen gegeben durch:
K2: N_{Std} >= N_{C}/2.
K1: N_{C}/2 > N_{Std} >= N_{C}/4.
K0: sonst.

In einer Ausgestaltung wird für WirelessHART definiert:
K2: in mindestens zwei Frequenzkanälen wird nur WirelessHART ermittelt.
K1: in einem Frequenzkanal wird nur WirelessHART ermittelt.
K0: sonst.

Eine Ausgestaltung sieht vor, dass es sich bei den Kommunikationsstandards beispielsweise um Wireless LAN, Bluetooth, ZigBee oder WirelessHART handeln kann.

Weiterhin löst die Erfindung die Aufgabe durch ein Verfahren zum Erkennen eines Kommunikationsstandards, das zumindest die folgenden Schritte aufweist:
Es wird mindestens ein Empfangssignal empfangen.
Das Empfangssignal oder ein davon abhängiges Signal wird mit mindestens einem Grenzwert abgetastet.
Ausgehend von der Abtastung wird ein Abtastsignal erzeugt.
Das Abtastsignal wird ausgewertet. Die Auswertung erfolgt anhand von Daten, die für mindestens einen Kommunikationsstandard und/oder mindestens einen Signalmodus hinterlegt worden sind. Weiterhin erfolgt die Auswertung in Bezug auf einen für das - insbesondere elektromagnetische - Empfangssignal verwendeten Kommunikationsstandard bzw. verwendeten Signalmodus. Es wird in einer Ausgestaltung bei der Auswertung eine Klassifizierung in Bezug auf Standard und/oder Modus vorgenommen.

Die Ausgestaltungen der Vorrichtungen lassen sich entsprechend auch durch das Verfahren realisieren, so dass die zugehörigen Ausführungen auch entsprechend gelten. Dies gilt auch umgekehrt, so dass sich das Verfahren auch durch die Vorrichtung realisieren lässt.

Es wird somit erkannt, mit welchen Kommunikationsstands - oder dann spezieller: mit welchem Modus - Signale von Sendern gesendet werden, indem diese Signale durch eine Abtastung mit mindestens einem Grenzwert "vereinfacht" werden und indem anschließend eine Mustererkennung vorgenommen wird.

Die vorliegende Erfindung umfasst in einer Ausgestaltung die automatische Erkennung von Kommunikationsstandards von Empfangssignalen mithilfe eines stromsparenden Signalempfängers. In einer Ausgestaltung handelt es sich bei den Kommunikationsstandards insbesondere um Funkstandards, so dass auch die Signale per Funk übertragen werden.

Im Einzelnen gibt es eine Vielzahl von Möglichkeiten, die erfindungsgemäße Vorrichtung und das erfindungsgemäße Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:
- Fig. 1: einen beispielhaften Aufbau der Vorrichtung zur Verdeutlichung der Prinzips,
- Fig. 2: einen beispielhaften Signalverlauf für die Abtastung mit einem Grenzwert,
- Fig. 3: einen beispielhaften Signalverlauf für die Abtastung mit drei Grenzwerten,
- Fig. 4: einen beispielhaften Signalverlauf für die Abtastung mit einem Grenzwert und die Erzeugung eines binären Digitalworts und
- Fig. 5: einen beispielhaften Signalverlauf mit einem Beispiel für Frequenz-Hopping.

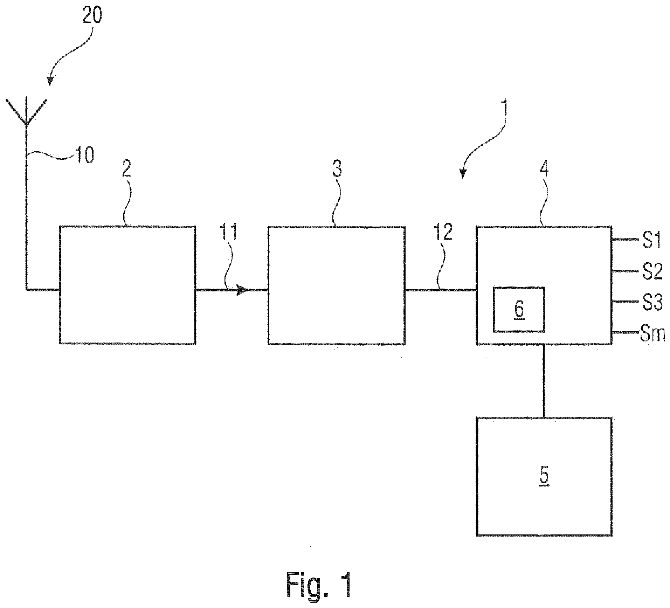

Die für die Kommunikationsstandarderkennung vorgesehene Vorrichtung 1, die in der dargestellten Ausgestaltung der Fig. 1 auch als Funkempfänger bezeichnet werden kann, ist stromsparend und zweistufig ausgeführt. Die elektromagnetischen Funksignale werden über eine Antennenvorrichtung 20 als Empfangssignale 10 vom Funkempfänger-Frontend 2 empfangen und über einen Zwischenfrequenzausgang als Zwischenfrequenz-Signale 11 an den nachgeschalteten Demodulator 3 übergeben. Der Demodulator 3 ist dabei beispielsweise als Amplitudenmodulations-Demodulator (AM) oder als Frequenzmodulations-Demodulator (FM) oder als Amplitudenumtastungs-Demodulator (ASK) ausgestaltet.

In der gezeigten Ausgestaltung werden sowohl das Funkempfänger-Frontend 2 als auch der Demodulator 3 - hier beide als analoge Schaltungsblöcke ausgestaltet - abtastend betrieben. Die stromsparende Eigenschaft des Funkempfängers 1 kann z. B. durch abtastenden Betrieb mit sehr kurzer Einschaltdauer erreicht werden. Beispiel: Einschaltdauer 100 ns, Abtastfrequenz 1 kHz, ON-Stromverbrauch 10 mA. Damit ist die mittlere Stromaufnahme bei 10 mA * 100 ns * 1 kHz = 1 µA. Dieser Wert ist so niedrig, dass ein jahrelanger Betrieb mit handelsüblichen Lithium- oder Silberoxid-Knopfzellen (übliche Batteriekapazitäten: ca. 20 mAh bis 200 mAh) möglich ist.

Bei der dargestellten Ausgestaltung handelt es sich bei dem Demodulator 3 um einen N-ASK-Demodulator, der (N - 1) Schaltschwellen oder Grenzwerte aufweist und ein binäres Digitalwort bereitstellt mit dem Wertebereich 0 bis (N - 1). Dieses Digitalwort ist dabei das Abtastsignal 12, das dem - vorzugsweise digitalen und für die Stromersparnis weiterhin mit einem möglichst niedrigen Systemtakt arbeitenden - Mustererkenner 4 zugeführt wird.

Die eingesetzten Schaltungskomponenten sollen möglichst effizient, d. h. mit geringer Stromaufnahme betrieben werden.

In einer Ausgestaltung arbeitet der Demodulator 3 als mehrwertiger Quantisierer.

Der Demodulator 3 verfügt in einer alternativen Ausgestaltung über nur einen Grenzwert (N = 2).

Die Grenzwerte weisen je nach Ausgestaltung äquidistant linear oder äquidistant logarithmisch oder beliebige Abstände auf.

Für die - gezeigte - Ausgestaltung mit mehreren Grenzwerten bzw. Entscheidungsschwellen ergeben sich beispielsweise folgende Vorteile:
- Überwinden und Tolerieren von Grundrauschen
- Überwinden und Tolerieren von statischen und dynamischen Störsignalen
- Ausnutzung der Empfängerdynamik, insbesondere für N >= 4.

Das Verfahren zur Kommunikationsstandarderkennung bzw. zur Erkennung des verwendeten Signalmodus sieht in einer Ausgestaltung vor, dass das Empfangssignal 10 oder das davon abhängige Signal 11 leistungsschwellwertbasiert und mit relativ niedriger Abtastrate erfasst wird.

Der Algorithmus zur Klassifikation des Kommunikationsstandards bzw. des Signalmodus basiert auf dem abgetasteten Signal bzw. dem binären Abtastsignal 12, welches in einer Ausgestaltung letztlich symbolisiert, ob zum entsprechenden Abtastzeitpunkt innerhalb der Empfangsbandbreite des Empfängers 2 ein Signal empfangen wurde oder nicht. Die Mustererkennung, die von dem Mustererkenner 4 ausgeführt wird, beruht in einer Ausgestaltung im Wesentlichen auf einfachen Zählwerken und Vergleichsoperationen und kann daher mit äußerst geringem algorithmischem Aufwand und äußerst stromsparend implementiert werden.

Der Mustererkenner 4 durchsucht die ankommende Folge von Abtastwerten des Abtastsignals mit - hier in einem externen Datenspeicher 5 - hinterlegten Suchmustern, die für unterschiedliche in Betracht gezogene Kommunikationsstandards typisch sind. Der Kommunikationsstandard, auf dem das Muster beruht, das dem tatsächlich empfangenen Datenstrom am meisten ähnelt, gilt als Entscheidung des Mustererkenners 4.

Die Suchmuster sind hier in einem separaten Arbeitsschritt zu ermitteln und dem Mustererkenner 4 zuzuführen.

Für den Empfang des Abtastsignals 12 verfügt der Mustererkenner 4 hier noch über einen internen Datenspeicher 6.

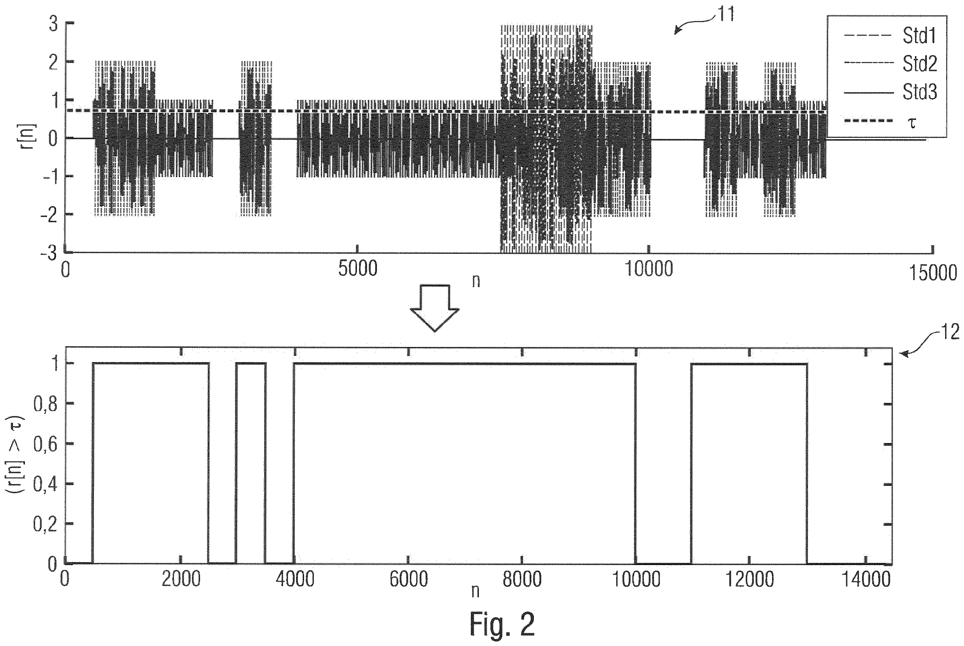

Die Fig. 2 zeigt einen zeitlichen Verlauf eines Zwischenfrequenz-Signals 11 in der oberen Reihe. Darunter befindet sich ein Abtastsignal 12, das sich durch die Abtastung mit einem Grenzwert ergibt.

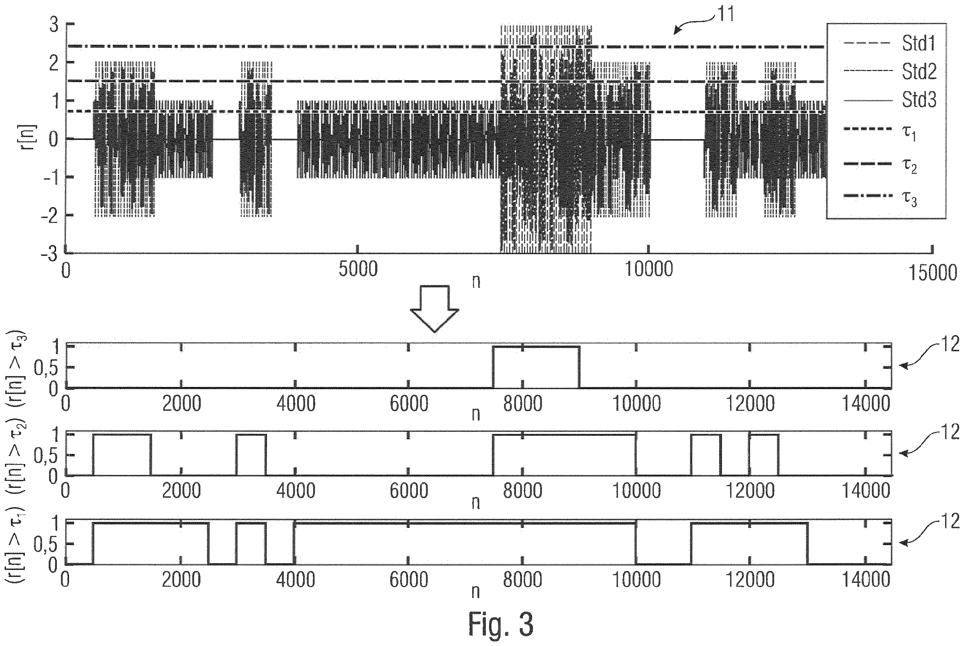

Die Fig. 3 zeigt das gleiche Zwischenfrequenz-Signals 11, das hier mit drei Grenzwerten abgetastet worden ist. Daher sind hier drei Abtastsignale 12 dargestellt. Die Grenzwerte werden dabei von oben nach unten kleiner. Deutlich zu erkennen ist, dass sich drei deutlich unterschiedliche Verläufe der Abtastsignale 12 ergeben.

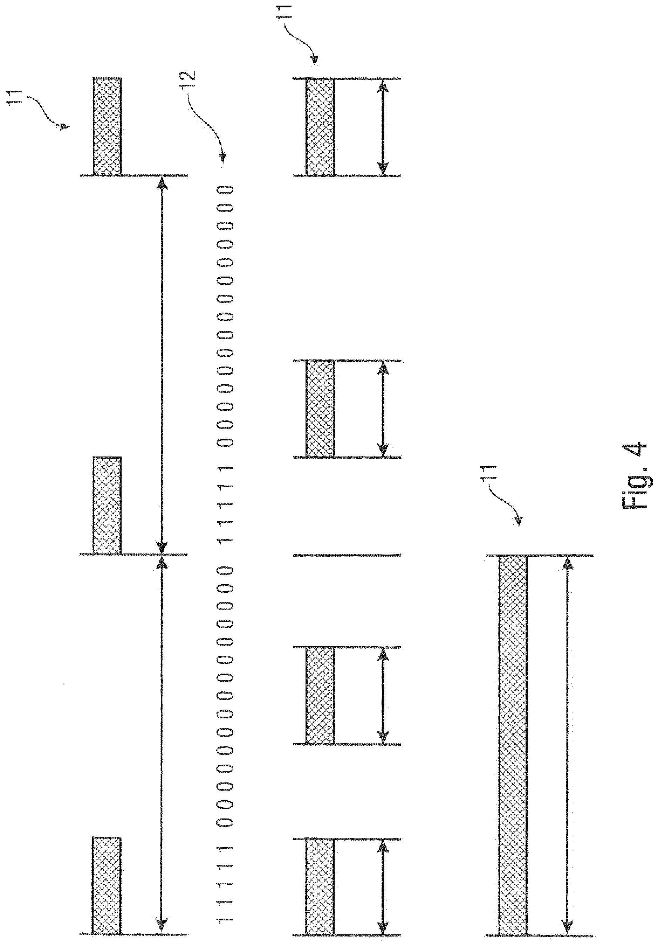

In der Fig. 4 ist dargestellt, wie aus den Zwischenfrequenz-Signalen 11, die jeweils in einem Frame gesendet werden, binäre Digitalsignale als Abtastsignale 12 erzeugt werden.

Die obere Reihe zeigt die Zwischenfrequenz-Signalen 11, bei denen pro Frame (angedeutet durch die senkrechten Trennungsstriche und die Doppelpfeile) nur ein kurzes Signal ausgegeben wird.

Durch die Abtastung ergibt sich als Abtastsignal 12 jeweils eine kurze Folge von Einsen, an die sich eine längere Folge von Nullen anschließt.

Darunter sind weitere Zwischenfrequenz-Signale 11 dargestellt, die unterschiedliche Signalpausen aufweisen bzw. die über eine deutlich längere Pulsdauer verfügen.

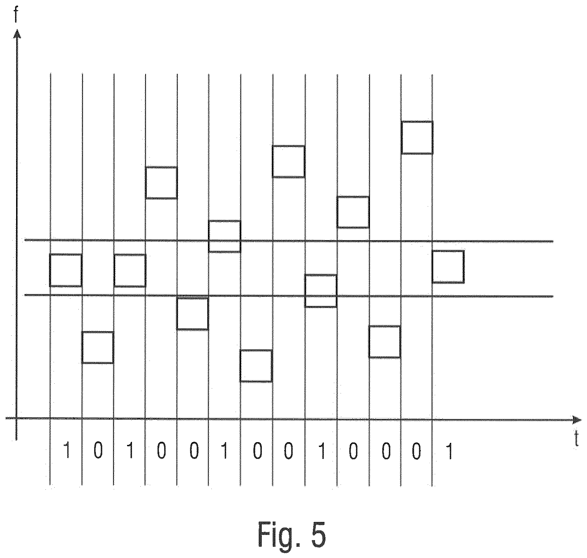

In der Fig. 5 schließlich ist ein Beispiel für ein Frequenz-Hopping dargestellt. Die Pulse sind über der Zeit aufgetragen und unterscheiden sich hinsichtlich ihrer Frequenz, die auf der y-Achse aufgetragen ist. Das Empfangssignal besteht daher aus unterschiedlichen Frequenzen, wobei sich hier in den jeweils einzeln betrachteten Frequenzbereichen jeweils unterschiedliche Verläufe ergeben. Aufgetragen unter der x-Achse sind hier die Abtastwerte, die sich über das mittlere Frequenzband ergeben. Für Frequenzen ober- bzw. unterhalb dieses Bandes ergeben sich andere Signalverläufe in den Abtastsignalen. Dabei betrage die Hopping-Frequenz 1,6 kHz. Die Abtastung erfolgt hier mit 0,625 ms.

Ist der Wechsel zwischen den Frequenzen charakteristisch für den Kommunikationsstandard bzw. für den jeweiligen Signalmodus, so dient der Wechsel zwischen den Frequenzen bzw. der zeitliche Verlauf der Pulse als Merkmale für die Mustererkennung.

Im Folgenden (mit Bezug auf die oben beschriebenen Abbildungen) sei eine Betriebsart beschrieben. Dies ist eine sog. transiente Mustererkennung (vgl. insbesondere Fig. 1):
In dieser Betriebsart wird eine Folge von Abtastwerten d[n] als Teil des Abtastsignals sequenziell z. B. mit konstanter Abtastrate erzeugt und in den Zwischenspeicher 6 des Mustererkenners 4 geladen. Dabei bleibt die eingestellte Empfangsfrequenz unverändert. Der Mustererkenner 4 kann wahlweise ständig mit Abtastwerten laufend geladen werden oder blockweise (d. h. zeitlich begrenzt, im Sinne eines "Beobachtungsfensters").

Der Mustererkenner 4 identifiziert charakteristische zeitliche Merkmale, wie z. B. Periodendauern, Pulsdauern, Pulspausen. Der Mustererkenner 4 ist je nach Ausgestaltung als binärer oder mehrwertiger digitaler Korrelator ausgeführt.

In dem Datenspeicher 5 werden Referenzsequenzen hinterlegt, um jeweils bestimmte Merkmale im Sinne eines Matched-Filters zu erkennen. Hierfür ist in einer Ausgestaltung ein Korrelator mehrfach implementiert, damit auf mehrere Merkmale gleichzeitig untersucht werden kann.

Bezüglich transienter Muster lassen sich grundsätzlich alle zeitbasierten Charakteristika der in Betracht gezogenen Standards nutzen, die typisch sind für den jeweiligen Standard. In Frage kommen hierzu beispielsweise:
- Paketdauern (bzw. Anzahl der logischen '1'-Samples bei gegebener Abtastrate),
- Inter-Paketintervalle (Dauer zwischen dem Ende eines Pakets und dem Beginn des nächsten Pakets),
- Paket-Startintervalle (Dauer zwischen dem Beginn eines Pakets und dem Beginn des nächsten Pakets),
- Paket-Stoppintervalle (Dauer zwischen dem Ende eines Pakets und dem Ende des nächsten Pakets).

Alternativ oder ergänzend sind komplexere Merkmale relevant, wie beispielsweise der Anteil der innerhalb eines bestimmten Zeitraums, in dem ein Empfangssignal vorlag (also die Anzahl aller der ,1'-Samples innerhalb eines vorgegeben Zeitraums), oder auch die Kombination bzw. Reihenfolge von verschiedenen Paketdauern innerhalb eines bestimmten Zeitraums.

Beispielsweise sei ein Standard gegeben, bei dem stets auf ein sehr kurzes Paket (bspw. 1 ms) für eine bestimmte Zeit kein Paket folgt (bspw. 0,5 ms), worauf sich stets oder sehr häufig ein längeres Paket anschließt (bspw. 10 ms). Diese Kombination aus kurzem Paket, Sendepause und langem Paket kann ebenfalls als Merkmal definiert und innerhalb des Mustererkenners 4 bzw. innerhalb des Datenspeichers 5 als Muster hinterlegt werden.

In einer Ausgestaltung werden - allgemein gesprochen - steigende und fallende Flanken innerhalb der zeitlichen Folge der Abtastwerte des Abtastsignals festgestellt und mit Methoden der Mustererkennung verglichen.

Eine weitere Betriebsart bezieht sich auf eine spektrale Mustererkennung:
Bei dieser Betriebsart wird die Empfangsfrequenz für jeden Abtastwert verändert, um ein spektrales Abbild in Form von digitalisierter Amplitudeninformation zu erhalten. Die Abtastwerte werden dann spektral interpretiert.

Der Mustererkenner 4 erkennt charakteristische spektrale Merkmale wie zusammenhängende Bandbreite, teilweise belegte Bandbreiten, Belegung bestimmter Frequenzen, Frequenzabstände (wie sie z.B. bei Frequenzsprungverfahren (Hopping oder FDMA) auftreten können).

Bezüglich spektraler Muster können beispielsweise für einen bestimmten Standard mit Frequency-Hopping typische Frequenzsprungmuster hinterlegt werden und mit den spektralen Charakteristika des empfangenen Signals verglichen werden. Hierzu ist der Empfänger bzw. das Funkempfänger-Frontend 2 so ausgestaltet, dass es Signale mit unterschiedlichen Empfangsfrequenzen nacheinander oder parallel empfängt. Entsprechend erlaubt der Demodulator 3 je nach Ausgestaltung, die Auswertung von mehreren Frequenzkanälen parallel (bzw. zeitgleich) oder zeitlich sequenziell.

Eine weitere Ausgestaltung der spektralen Kommunikationsstandarderkennung besteht im Auswerten eines Frequenzkanals, der exklusiv einem Kommunikationsstandard zugeordnet ist. Bei Empfang von Signalleistung in diesem Kanal kann somit auf das Vorhandensein genau dieses Standards geschlossen werden.

In einer Ausgestaltung wird ausgehend von Daten, die z. B. durch analytische Ermittlung, durch Messung oder durch Simulationen erzeugt werden, ein Klassifikations- bzw. Mustererkennungsalgorithmus trainiert, der anschließend eine Entscheidungsregel abhängig von dem empfangenen Empfangssignal liefert.

In einer dritten Betriebsart wird für eine bestimmte Zeitspanne Betriebsart 1 (transient) gewählt. Der Mustererkenner 4 bewertet die Abtastwertefolge - also das Abtastsignal 12 - und legt die Zwischenbewertung in einem gesonderten Speicher ab. Dann wird die nächste Empfangsfrequenz eingestellt und wieder für eine bestimmte Zeitspanne Betriebsart 1 (transient) ausgeführt. Nach mehreren eingestellten Empfangsfrequenzen (z. B. z Kanäle) erhält man z Zwischenbewertungen, die in einer gesonderten Logik zu einer Gesamtbewertung verarbeitet werden. Im einfachsten Fall kann dies eine Zählerlogik sein, die die Zwischenbewertungen für jeweils einen Kommunikationsstandard aufsummiert.

Es seien noch einmal Kommunikationsstandards und Signalmodi beispielhaft genannt, die sich mit der Erfindung erkennen lassen:
Kommunikations- bzw. speziell Funkstandards: Wireless LAN (IEEE 802.11), Bluetooth, ZigBee (basierend auf IEEE 802.15.4) und WirelessHART (ebenfalls basierend auf IEEE 802.15.4), z. B. im 2,4 GHz ISM-Band.

Beispielhafte Signalmodi oder Betriebsmodi sind: Verbindungsaufbau, Inquiry, Datenübertragung oder unterschiedliche Frequenzkanäle.

Für die Gewinnung der Vergleichsdaten lassen sich beispielsweise für jeden Standard und jeden Betriebsmodus die Paketdauern und Interpaketintervalle ermitteln. Mit den Daten wird in einer Ausgestaltung ein Klassifikator in Form eines binären Entscheidungsbaums mittels des C4.5-Trainingsalgorithmus entwickelt. Ein solcher Klassifikator erlaubt dann anhand der Paketdauern und Inter-Paketintervalle eines empfangenen Signals automatisch zu erkennen, um welchen der in Betracht gezogenen Standards bzw. um welchen Signalmodus es sich bei dem empfangenen Signal handelt.

Das Erkennen eines Signalmodus geht dabei in einer Ausgestaltung damit einher, dass zunächst das Vorliegen eines Kommunikationsstandards erkannt wird, zu dem der Signalmodus gehört.

Ein Vorteil der Vorrichtung bezüglich der automatischen Erkennung bzw. Klassifikation von Kommunikationsstandards besteht darin, dass das Empfangssignal mit einem äußerst stromsparenden Schwellwertempfänger 3 empfangen und digitalisiert werden. Dadurch liegen für den Mustererkenner 4 lediglich 0-1-Folgen vor (bzw. mehrere 0-1-Folgen für einen mehrwertigen Schwellwertempfänger 3), aus denen der vorliegende Kommunikationsstandard oder die vorliegenden Standards bzw. der Signalmodus zu erkennen ist.

Stromaufnahmen für die Erkennung von verbreiteten Kommunikationsstandards unter 20 µA sind erzielbar. Damit ist ein jahrelanger Dauerbetrieb mit Batterien möglich.

Die Vorrichtung erlaubt das Nachrüsten bestehender Funkmodule, damit die Stromaufnahme bei gleicher Funktionalität verringert werden kann. Entsprechendes gilt für den Gebäude- und Heimautomatisierbereich.

Eine weitere Anwendung erlaubt das Erkennen von unerwünschten Signalen. Dies kann sich auf die Einhaltung der Funksignalhygiene beziehen oder auch auf das Eindringen von nicht autorisierten Personen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (1) zum Erkennen eines Kommunikationsstandards,
wobei die Vorrichtung (1) mindestens ein Funkempfänger-Frontend (2), einen Demodulator (3) und einen Mustererkenner (4) aufweist,
wobei das Funkempfänger-Frontend (2) derartig ausgestaltet ist, mindestens ein Empfangssignal (10) zu empfangen,
wobei der Demodulator (3) derartig ausgestaltet ist, das Empfangssignal (10) und/oder ein davon abhängiges Signal (11) mit mindestens einem Grenzwert abzutasten und ausgehend von der Abtastung mindestens ein binäres Digitalwort als Abtastsignal (12) zu erzeugen,
wobei der Demodulator (3) derartig ausgestaltet ist, das Abtastsignal (12) derartig zu erzeugen, dass das Abtastsignal (12) Information darüber gibt, wie zu einem Abtastzeitpunkt das Empfangssignal (10) und/oder das davon abhängige Signal (11) relativ zu dem mindestens einen Grenzwert liegt,
wobei der Mustererkenner (4) derartig ausgestaltet ist, das Abtastsignal (12) anhand für mindestens einen Kommunikationsstandard und/oder für mindestens einen Signalmodus hinterlegten Daten in Bezug auf einen für das Empfangssignal (10) verwendeten Kommunikationsstandard und/oder in Bezug auf einen für das Empfangssignal (10) verwendeten Signalmodus des Kommunikationsstandards auszuwerten, und
wobei der Mustererkenner (4) derartig ausgestaltet ist, innerhalb des Abtastsignals (12) eine Dauer eines Datenpakets und eine Dauer zwischen zwei Datenpaketen zu ermitteln.

2. Vorrichtung (1) nach Anspruch 1,
wobei das Funkempfänger-Frontend (2) derartig ausgestaltet ist, basierend auf dem Empfangssignal (10) ein Zwischenfrequenz-Signal (11) zu erzeugen, und wobei eine Frequenz des Zwischenfrequenz-Signals (11) kleiner als eine Frequenz des Empfangssignals (10) ist.

3. Vorrichtung (1) nach einem der Ansprüche 1 oder 2,
wobei das binäres Digitalwort einen Wertebereich zwischen Null und einer Anzahl der von dem Demodulator (3) verwendeten Grenzwerte aufweist.

4. Vorrichtung (1) nach einem der Ansprüche 1 bis 3,
wobei der Demodulator (3) derartig ausgestaltet ist, das Empfangssignal (10) und/oder das davon abhängige Signal (11) mit mehreren Grenzwerten abzutasten.

5. Vorrichtung (1) nach Anspruch 4,
wobei der Demodulator (3) derartig ausgestaltet ist, für die Abtastung mit jeweils einem Grenzwert ein zugehöriges Abtastsignal (12) zu erzeugen.

6. Vorrichtung (1) nach einem der Ansprüche 1 bis 5,
wobei der Demodulator (3) derartig ausgestaltet ist, das Abtastsignal (12) als Folge von Abtastwerten mit einer vorgebbaren Abtastrate zu erzeugen.

7. Vorrichtung (1) nach einem der Ansprüche 1 bis 6,
wobei der Mustererkenner (4) derartig ausgestaltet ist, das Abtastsignal (12) nach mindestens einem für einen Kommunikationsstandard und/oder einen Signalmodus hinterlegten Suchmuster zu durchsuchen und ein Maß für die Ähnlichkeit zu ermitteln.

8. Vorrichtung (1) nach einem der Ansprüche 1 bis 7,
wobei der Mustererkenner (4) derartig ausgestaltet ist, das Abtastsignal (12) nach mehreren für unterschiedliche Kommunikationsstandards und/oder für unterschiedliche Signalmodi hinterlegten Suchmustern zu durchsuchen und ein Maß für die Ähnlichkeit zu ermitteln.

9. Vorrichtung (1) nach einem der Ansprüche 1 bis 8,
wobei der Mustererkenner (4) derartig ausgestaltet ist, das Abtastsignal (12) oder Teile des Abtastsignals (12) nach Merkmalen, für die Referenzdaten hinterlegt sind, zu durchsuchen.

10. Vorrichtung (1) nach einem der Ansprüche 1 bis 9,
wobei der Mustererkenner (4) derartig ausgestaltet ist, innerhalb des Abtastsignals (12) steigende und/oder fallende Flanken zu erkennen, zu charakterisieren und mit den für die Kommunikationsstandards und/oder die Signalmodi hinterlegen Daten abzugleichen.

11. Vorrichtung (1) nach einem der Ansprüche 1 bis 10,
wobei der Mustererkenner (4) derartig ausgestaltet ist, das Abtastsignal (12) in Abhängigkeit von einer Empfangsfrequenz auszuwerten, mit der das Funkempfänger-Frontend (2) das dem Abtastsignal (12) zugehörige empfangene elektromagnetische Empfangssignal (10) empfangen hat.

12. Verfahren zum Erkennen eines Kommunikationsstandards,
wobei mindestens ein Empfangssignal (10) empfangen wird,
wobei das Empfangssignal (10) und/oder ein davon abhängiges Signal (11) mit mindestens einem Grenzwert abgetastet wird,
wobei ausgehend von der Abtastung mindestens ein binäres Digitalwort als Abtastsignal (12) erzeugt wird,
wobei das Abtastsignal (12) so erzeugt wird, dass das Abtastsignal (12) Information darüber gibt, wie zu einem Abtastzeitpunkt das Empfangssignal (10) und/oder das davon abhängige Signal (11) relativ zu dem mindestens einen Grenzwert liegt, wobei das Abtastsignal (12) anhand von Daten, die für mindestens einen Kommunikationsstandard und/oder mindestens einen Signalmodus hinterlegt sind, in Bezug auf einen für das Empfangssignal (10) verwendeten Kommunikationsstandard und/oder verwendeten Signalmodus des Kommunikationsstandards ausgewertet wird, und
wobei innerhalb des Abtastsignals (12) eine Dauer eines Datenpakets und eine Dauer zwischen zwei Datenpaketen ermittelt wird.

## Claims

1. Apparatus (1) for detecting a communication standard,
wherein the apparatus (1) comprises at least one radio receiver front-end (2), a demodulator (3) and a pattern detector (4),
wherein the radio receiver front-end (2) is configured to receive at least one receive signal (10),
wherein the demodulator (3) is configured to sample the receive signal (10) and/or a signal (11) depending thereon with at least one limiting value and to generate, starting from the sampling, at least one binary digital word as sampling signal (12), wherein the demodulator (3) is configured to generate the sampling signal (12) such that the sampling signal (12) gives information on how the receive signal (10) and/or the signal (11) depending thereon lies relative to the at least one limiting value at a sampling time,
wherein the pattern detector (4) is configured to evaluate the sampling signal (12) based on data stored for at least one communication standard and/or for at least one signal mode with regard to the communication standard used for the receive signal (10) and/or with regard to a signal mode of the communication standard used for the receive signal (10) and
wherein the pattern detector (4) is configured to determine a duration of a data packet and a duration between two data packets within the sampling signal (12).

2. Apparatus (1) according to claim 1,
wherein the radio receiver front-end (2) is configured to generate an intermediate frequency signal (11) based on the receive signal (10) and wherein a frequency of the intermediate frequency signal (11) is smaller than a frequency of the receive signal (10).

3. Apparatus (1) according to one of claims 1 or 2,
wherein the binary digital word comprises a range of values between zero and a number of limiting values used by the demodulator (3).

4. Apparatus (1) according to one of claims 1 to 3,
wherein the demodulator (3) is configured to sample the receive signal (10) and/or the signal depending thereon (11) with several limiting values.

5. Apparatus (1) according to claim 4,
wherein the demodulator (3) is configured to generate an allocated sampling signal (12) for sampling with at least one limiting value.

6. Apparatus (1) according to one of claims 1 to 5,
wherein the demodulator (3) is configured to generate the sampling signal (12) as a sequence of sampling values with a predeterminable sampling rate.

7. Apparatus (1) according to one of claims 1 to 6,
wherein the pattern detector (4) is configured to search the sampling signal (12) for at least one search pattern stored for a communication standard and/or a signal mode and to determine a degree of similarity.

8. Apparatus (1) according to one of claims 1 to 7,
wherein the pattern detector (4) is configured to search the sampling signal (12) for several search patterns stored for different communication standards and/or for different signal modes and to determine a degree of similarity.

9. Apparatus (1) according to one of claims 1 to 8,
wherein the pattern detector (4) is configured to search the sampling signal (12) or parts of the sampling signal (12) for features for which reference data are stored.

10. Apparatus (1) according to one of claims 1 to 9,
wherein the pattern detector (4) is configured to detect rising and/or trailing edges within the sampling signal (12), characterize the same and compare the same with the data stored for the communication standards and/or the signal modes.

11. Apparatus (1) according to one of claims 1 to 10,
wherein the pattern detector (4) is configured to evaluate the sampling signal (12) in dependence on a receive frequency by which the radio receiver front-end (2) has received the received electromagnetic receive signal (10) allocated to the sample signal (12).

12. Method for detecting a communication standard,
wherein at least one receive signal (10) is received,
wherein the receive signal (10) and/or a signal (11) depending thereon are sampled with at least one limiting value,
wherein, starting from the sampling, at least one binary digital word is generated as sampling signal (12),
wherein the sampling signal (12) is generated such that the sampling signal (12) gives information on how the receive signal (10) and/or the signal depending thereon (11) lies relative to at least one limiting value at a sampling time, wherein the sampling signal (12) is evaluated, based on data stored for at least one communication standard and/or at least one signal mode, with regard to a communication standard and/or signal mode of the communication standard used for the receive signal (10) and
wherein a duration of a data packet and a duration between two data packets is determined within the sampling signal (12).

## Revendications

1. Dispositif (1) de détection d'une norme de communication,
dans lequel le dispositif (1) présente au moins un étage d'entrée de récepteur radio (2), un démodulateur (3) et un détecteur de modèle (4),
dans lequel l'étage d'entrée de récepteur radio (2) est configuré pour recevoir au moins un signal de réception (10),
dans lequel le démodulateur (3) est conçu pour balayer le signal de réception (10) et/ou un signal (11) qui dépend de ce dernier avec au moins une valeur limite et pour générer, partant du balayage, au moins un mot numérique binaire comme signal de balayage (12),
dans lequel le démodulateur (3) est conçu pour générer le signal de balayage (12) de sorte que le signal de balayage (12) fournisse des informations sur la manière dont se situe, à un moment de balayage, le signal de réception (10) et/ou un signal qui dépend de ce dernier (11) par rapport à l'au moins une valeur limite,
dans lequel le détecteur de modèle (4) est conçu pour évaluer le signal de balayage (12) à l'aide de données mémorisées pour au moins une norme de communication et/ou pour au moins un mode de signal en ce qui concerne une norme de communication utilisée pour le signal de réception (10) et/ou en ce qui concerne un mode de signal de la norme de communication utilisé pour le signal de réception (10), et
dans lequel le détecteur de modèle (4) est configuré pour déterminer dans le signal de balayage (12) une durée d'un paquet de données et une durée entre deux paquets de données.

2. Dispositif (1) selon la revendication 1,
dans lequel l'étage d'entrée de récepteur radio (2) est conçu pour générer, sur base du signal de réception (10), un signal de fréquence intermédiaire (11), et dans lequel une fréquence du signal de fréquence intermédiaire (11) est inférieure à une fréquence du signal de réception (10).

3. Dispositif (1) selon l'une des revendications 1 ou 2,
dans lequel le mot numérique binaire présente une plage de valeurs comprise entre zéro et un nombre des valeurs limites utilisées par le démodulateur (3).

4. Dispositif (1) selon l'une des revendications 1 à 3,
dans lequel le démodulateur (3) est conçu pour balayer le signal de réception (10) et/ou le signal (11) qui dépend de ce dernier avec plusieurs valeurs limites.

5. Dispositif (1) selon la revendication 4,
dans lequel le démodulateur (3) est conçu pour générer, pour le balayage avec chaque fois une valeur limite, un signal de balayage associé (12).

6. Dispositif (1) selon l'une des revendications 1 à 5,
dans lequel le démodulateur (3) est conçu pour générer le signal de balayage (12) comme une séquence de valeurs de balayage à un débit de balayage pouvant être prédéterminé.

7. Dispositif (1) selon l'une des revendications 1 à 6,
dans lequel le détecteur de modèle (4) est conçu pour rechercher le signal de balayage (12) selon au moins un modèle de recherche mémorisé pour une norme de communication et/ou un mode de signal et pour déterminer une mesure de similitude.

8. Dispositif (1) selon l'une des revendications 1 à 7,
dans lequel le détecteur de modèle (4) est conçu pour rechercher le signal de balayage (12) selon plusieurs modèles de recherche mémorisés pour différentes normes de communication et/ou pour différents modes de signal et pour déterminer une mesure de similitude.

9. Dispositif (1) selon l'une des revendications 1 à 8,
dans lequel le détecteur de modèle (4) est conçu pour rechercher le signal de balayage (12) ou des parties du signal de balayage (12) selon des caractéristiques pour lesquelles sont mémorisées des données de référence.

10. Dispositif (1) selon l'une des revendications 1 à 9,
dans lequel le détecteur de modèle (4) est conçu pour détecter et caractériser dans le signal de balayage (12) des flancs montants et/ou descendants et pour les comparer avec les données mémorisées pour les normes de communication et/ou les modes de signal.

11. Dispositif (1) selon l'une des revendications 1 à 10,
dans lequel le détecteur de modèle (4) est conçu pour évaluer le signal de balayage (12) en fonction d'une fréquence de réception à laquelle l'étage d'entrée de récepteur radio (2) a reçu le signal de réception électromagnétique (10) associé au signal de balayage (12).

12. Procédé de détection d'une norme de communication,
dans lequel est reçu au moins un signal de réception (10), dans lequel le signal de réception (10) et/ou un signal (11) qui dépend de ce dernier est balayé avec au moins une valeur limite, dans lequel est généré, partant du balayage, au moins un mot numérique binaire comme signal de balayage (12),
dans lequel le signal de balayage (12) est généré de sorte que le signal de balayage (12) donne des informations sur la manière dont se situe, à un moment de balayage, le signal de réception (10) et/ou un signal qui dépend de ce dernier (11) par rapport à l'au moins une valeur limite,
dans lequel le signal de balayage (12) est évalué à l'aide de données mémorisées pour au moins une norme de communication et/ou pour au moins un mode de signal en ce qui concerne une norme de communication utilisée pour le signal de réception (10) et/ou un mode de signal de la norme de communication utilisé pour le signal de réception (10), et
dans lequel sont déterminées dans le signal de balayage (12) une durée d'un paquet de données et une durée entre deux paquets de données.
